# EUROPEAN PATENT APPLICATION

(11) **EP 4 023 608 A1**
(43) Date of publication of application: **06.07.2022**
(21) Application number: 20906864.2
(22) Date of filing: 26.10.2020
(51) Int. Cl.: C01G 53/00, H01M 4/58, H01M 4/00, H01M 10/052, H01M 10/00, B60L 50/64

(54) **CARBONATE BINARY PRECURSOR WITH HOLLOW STRUCTURE, PREPARATION METHOD THEREFORE AND USE THEREOF**

(30) Priority: 26.12.2019 CN 201911368829
(71) Applicant: SVOLT ENERGY TECHNOLOGY CO., LTD, Changzhou, Jiangsu 213200 (CN)
(72) Inventor: REN, Haipeng, hangzhou, Jiangsu 213200 (CN); WAN, Jiangtao, hangzhou, Jiangsu 213200 (CN); CHA, Guemju, hangzhou, Jiangsu 213200 (CN); ZHANG, Yongjie, hangzhou, Jiangsu 213200 (CN); ZHANG, Ning, hangzhou, Jiangsu 213200 (CN); CHEN, Tingting, hangzhou, Jiangsu 213200 (CN)
(74) Representative: Cabinet Beaumont
(86) International application number: PCT/CN2020/123616
(87) International publication number: WO 2021/129108

(57) **Abstract**

A carbonate binary precursor with a hollow structure, a preparation method therefor and use thereof. The precursor has a chemical formula of NiₓMn₍₁₋ₓ₎CO₃, wherein x is 0.55 to 0.92. The carbonate binary precursor with the hollow structure has the advantages of controllable particle size, uniform particle size distribution and high sphericity, and excellent electrochemical performance and energy density.

## Description

### TECHNICAL FIELD

The present disclosure relates to the field of lithium batteries, for example, to a carbonate binary precursor with a hollow structure, a preparation method therefor and a use thereof.

### BACKGROUND

At present, with the rapid development of energy technology, lithium-ion batteries have been widely applied in various aspects of the society and researches on ternary cathode materials thereof have received extensive attention of the society. At present, relatively mature cathode materials for secondary lithium-ion batteries include LiCoO₂, LiNiO₂, LiMnO₂ and spinel LiMn₂O₄. LiCoO₂ has a high specific capacity, a high and stable discharge platform and good cycle performance. However, cobalt is scarce and expensive and its toxicity causes relatively severe environmental pollution. Although LiNiO₂ has the same NaFeO₂ structure as LiCoO₂ and has a high specific capacity, LiNiO₂ has harsh synthesis conditions and poor thermal stability and is easy to decompose at a relatively high temperature. Moreover, products during and after the synthesis of LiNiO₂ easily absorb water so that LiNiO₂ is difficult to be commercially produced in large amounts. Spinel LiMn₂O₄ is resistant to overcharge and has good safety performance. However, spinel LiMn₂O₄ has poor cycle performance, a capacity that decays rapidly at a high temperature (over 55 °C), a relatively low theoretical specific capacity (148 mAh/g). Moreover, it is difficult to prepare a pure single-phase product and a spinel structure is unstable during charging and discharging. LiMnO₂ is a thermodynamically unstable system; although undoped m-LiMnO₂ can obtain an initial specific charge capacity of up to 270 mAh/g, the specific capacity decays very severely during initial charging and discharging, and can almost maintain half of the capacity. This is because the structure of m-LiMnO₂ begins to convert to a spinel structure during an initial cycle and almost completely converts to a spinel phase after several cycles.

In recent years, ternary materials have been rapidly developed due to the combination of all advantages of the preceding three materials and low-cobalt and cobalt-free cathode materials are more likely to become an important development direction in the future. Therefore, the development of high-quality high-nickel low-cobalt ternary precursors and cathode materials has become a hot spot. At present, many manufacturers generally use hydroxide precursors as raw materials that are mixed and sintered with lithium salts into ternary cathode materials. However, there are relatively few or no researches on carbonate ternary precursors and cathode materials thereof. Moreover, most of the reported carbonate ternary precursor materials have some problems, such as non-uniform particle size distribution, poor sphericity and a failure to be continuously produced.

Therefore, existing lithium battery precursor materials need to be further explored.

### SUMMARY

The present disclosure provides a carbonate binary precursor with a hollow structure, a preparation method therefor and a use thereof.

In an embodiment, the present disclosure provides a carbonate binary precursor with a hollow structure. The precursor has a chemical formula of NiₓMn₍₁₋ₓ₎CO₃, wherein x is 0.55 to 0.92, for example, 0.55, 0.6, 0.65, 0.7, 0.75, 0.8, 0.85, 0.9, 0.92 or the like.

In an embodiment provided by the present disclosure, the carbonate binary precursor with the hollow structure has the advantages of a controllable particle size, uniform particle size distribution, high sphericity, and excellent electrochemical performance and energy density. The carbonate binary precursor with the hollow structure can be stably produced in both an ammonia system and an ammonia-free system. Especially in the ammonia-free system, no ammonia-containing wastewater is produced so that the carbonate binary precursor with the hollow structure is environmentally friendly. At the same time, the carbonate binary precursor with the hollow structure contains no metal cobalt, which not only has a reduced raw material cost, but also causes no environmental pollution compared with an existing ternary nickel-cobalt-manganese precursor. In addition, a cathode material prepared by use of the precursor has a relatively high specific capacity and excellent cycle performance and electrochemical discharge performance. If the content of nickel in the precursor is too high, lithium/nickel mixing in the obtained cathode material is severe, resulting in poor cycle performance of a lithium battery loaded with the cathode material. If the content of nickel in the precursor is too low, the lithium battery with the cathode material prepared using the precursor has a reduced capacity.

In an embodiment, the precursor has a layer thickness of 2-3 µm, for example, 2.0 µm, 2.1 µm, 2.2 µm, 2.3 µm, 2.4 µm, 2.5 µm, 2.6 µm, 2.7 µm, 2.8 µm, 2.9 µm, 3.0 µm or the like.

In an embodiment provided by the present disclosure, the precursor has a layer thickness of 2-3 µm. If the thickness of the precursor layer is too high, an electrolyte in the lithium battery loaded with the cathode material prepared by the precursor has poor osmosis and lithium ions are transmitted for a longer distance, resulting in poor battery performance. If the thickness of the precursor layer is too low, a shell layer is destroyed during the transmission of lithium ions in the lithium battery loaded with the cathode material prepared by the precursor and the cycle performance of the battery is greatly reduced.

In an embodiment, the precursor has a particle size of 8-15 µm, for example, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm or the like.

The particle size in an embodiment of the present disclosure is an average particle size.

In an embodiment, the present disclosure provides a method for preparing the precursor, comprising:
(1) mixing a soluble nickel salt and a soluble manganese salt to obtain a mixed metal salt;
(2) pre-adding a precipitant to a reaction kettle, and then adding a part of the mixed metal salt, the precipitant and a strong acid to the reaction kettle with stirring for a co-precipitation reaction to obtain a prefabricated particle;
(3) adding another part of the mixed metal salt and the precipitant to the reaction kettle with stirring so that the mixed metal salt and the precipitant undergo a co-precipitation reaction on a surface of the prefabricated particle so as to obtain a reacted liquid;
(4) mixing the reacted material with a detergent with stirring to obtain a primary washed-material;
(5) performing primary dehydration on the primary washed-material to obtain a primary dehydrated-material;
(6) performing secondary washing on the primary dehydrated-material and then performing dehydration to obtain a secondary dehydrated-material ; and
(7) drying the secondary dehydrated-material and then sieving same to remove iron to obtain the carbonate binary precursor with the hollow structure.

In an embodiment provided by the present disclosure, the precipitant is pre-added to the reaction kettle, and then the mixed metal salt containing the soluble nickel salt and the soluble manganese salt, the precipitant and the strong acid are added to the reaction kettle for the co-precipitation reaction so that the prefabricated particle is obtained which has a small particle size, and then the mixed metal salt and the precipitant are added to the reaction kettle for the co-precipitation reaction with the prefabricated particle having a small particle size as a seed crystal. Due to the addition of the strong acid in the process of prefabricating the particle, the obtained prefabricated particle contains the strong acid, and during the co-precipitation reaction with the prefabricated particle having a small particle size as the seed crystal, the strong acid in the prefabricated particle as the seed crystal continuously reacts with a carbonate precipitate formed in the seed crystal so that a particle with the hollow structure is obtained. Finally, through subsequent washing, dehydration, drying and sieving for iron removal, the carbonate binary precursor may be prepared, which has a hollow sphere structure, a controllable particle size, uniform particle size distribution, high sphericity, and excellent electrochemical performance and energy density. The carbonate binary precursor with the hollow structure can be stably produced in both an ammonia system and an ammonia-free system. Especially in the ammonia-free system, no ammonia-containing wastewater is produced so that the carbonate binary precursor is environmentally friendly. At the same time, the carbonate binary precursor with the hollow structure contains no metal cobalt, which not only has a reduced raw material cost, but also causes no environmental pollution compared with an existing ternary nickel-cobalt-manganese precursor. In addition, a cathode material prepared by use of the precursor obtained by the method has a relatively high specific capacity and excellent cycle performance and electrochemical discharge performance.

In step (1) provided by an embodiment of the present disclosure, no metal cobalt is added in the process of preparing the precursor so that the precursor not only has the reduced raw material cost, but also causes no environmental pollution compared with the existing ternary nickel-cobalt-manganese precursor. Meanwhile, the precursor prepared in the present application still has the excellent electrochemical performance and energy density.

In step (2) provided by the embodiment of the present disclosure, the precipitant is pre-added to the reaction kettle, and then a part of the mixed metal salt, the precipitant and the strong acid are simultaneously added to the reaction kettle with stirring for the co-precipitation reaction so that the prefabricated particle is obtained. The precipitant is pre-added to the reaction kettle, and then the mixed metal salt, the precipitant and the strong acid are added, ensuring that the precipitant preferentially reacts with the mixed metal salt so as to obtain a precipitated particle coating the strong acid, that is, the prefabricated particle coating the strong acid. Therefore, during the subsequent co-precipitation reaction with the prefabricated particle having a small particle size as the seed crystal, the strong acid in the prefabricated particle as the seed crystal continuously reacts with the carbonate precipitate formed in the seed crystal so that the particle with the hollow structure is obtained.

In step (3) provided by an embodiment of the present disclosure, with stirring, the mixed metal salt and the precipitant are added to the reaction kettle with the obtained prefabricated particle so that the mixed metal salt and the precipitant undergo the co-precipitation reaction on the surface of the obtained prefabricated particle. Due to the addition of the strong acid in the process of prefabricating the particle, the obtained prefabricated particle contains the strong acid, and during the co-precipitation reaction with the prefabricated particle having a small particle size as the seed crystal, the strong acid in the prefabricated particle as the seed crystal continuously reacts with the carbonate precipitate formed in the seed crystal so that the reacted liquid is obtained, which contains the particle with the hollow structure.

In step (4) provided by an embodiment of the present disclosure, the reacted material obtained in step (3) overflows to an aging kettle and is mixed with the detergent with stirring so that the primary washed-material is obtained. The detergent used in the process is a detergent conventionally used in the art, and may be, for example, a sodium hydroxide solution. It is to be noted that those skilled in the art can select a rotational speed of the stirring and an amount of the detergent added to the aging kettle according to actual requirements as long as partial sodium and sulfur can be removed from the reacted material.

In step (5) provided by an embodiment of the present disclosure, the primary washed-material obtained in step (4) is subjected to primary dehydration so that the primary dehydrated-material is obtained. The primary dehydration may be carried out by a centrifuge, and a moisture content of the primary dehydrated-material is not higher than 10wt%.

In step (6) provided by an embodiment of the present disclosure, the primary dehydrated-material obtained in step (5) is subjected to the secondary washing and then dehydrated so that the secondary dehydrated-material is obtained. The primary dehydrated-material is subjected to the secondary washing with pure water so that impurities such as sodium and sulfur in the primary dehydrated-material are further removed. Those skilled in the art can select an amount of pure water and the rotational speed and time of the stirring according to actual requirements as long as the primary dehydrated-material can be washed until the content of sodium and the content of sulfur are qualified. Moreover, the dehydration may also be carried out by the centrifuge, and a moisture content of the secondary dehydrated-material is not higher than 10wt%.

In an embodiment, in step (1), the soluble nickel salt and the soluble manganese salt are mixed according to a molar ratio (0.55-0.92):(0.08-0.45) of nickel to manganese, for example, 0.55:0.45, 0.6:0.4, 0.7:0.3, 0.8:0.2, 0.9:0.1, 0.92:0.08 or the like.

In an embodiment, in step (1), in the mixed metal salt, the soluble nickel salt and the soluble manganese salt each independently have a concentration of 1-2 mol/L, for example, 1.0 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L, 2.0 mol/L or the like.

In an embodiment, in step (1), the soluble nickel salt is at least one selected from nickel chloride and nickel sulfate.

In an embodiment, in step (1), the soluble manganese salt is at least one selected from manganese chloride and manganese sulfate.

In an embodiment, in step (2), based on a 1 L reaction kettle, the precipitant is pre-added in an amount of 2-10 g, for example, 2 g, 3 g, 4 g, 5 g, 6 g, 7g, 8 g, 9 g, 10 g or the like.

In an embodiment provided by the present disclosure, if the pre-added precipitant is too high, the produced crystal nuclei agglomerate, resulting in poor sphericity of the precursor subsequently obtained. If the content of the pre-added precipitant is too low, the produced crystal nuclei have too large a particle size and the amount of nucleation is also reduced. At the same time, the hollow structure of the precursor prepared later also has a larger particle size and a wall thickness of the precursor is thinner, which has a negative effect on the performance of the battery loaded with the cathode material prepared by the precursor.

In an embodiment, in step (2), the stirring is conducted at a rotational speed of 200-500 rpm, for example, 200 rpm, 250 rpm, 300 rpm, 350 rpm, 400 rpm, 450 rpm, 500 rpm or the like.

In an embodiment, in step (2), the mixed metal, the precipitant and the strong acid are added to the reaction kettle at a molar ratio of 1:(2.5-5):(0.1-1), for example, 1:2.5:0.1, 1:3:0.2, 1:3.5:0.5, 1:4:0.7, 1:5:1 or the like.

In an embodiment provided by the present disclosure, the mixed metal, the precipitant and the strong acid are added to the reaction kettle at a molar ratio of 1:(2.5-5):(0.1-1). Too high a molar ratio thereof results in poor sphericity of the precursor and a relatively low tap density. Too high a molar ratio thereof results in a larger particle size and a thinner shell layer of the precursor with the hollow structure obtained in the later reaction, which has a very negative effect on the cycle performance of the battery loaded with the cathode material prepared by the precursor.

In an embodiment, in step (2), the strong acid is hydrochloric acid, sulfuric acid or nitric acid.

In an embodiment, in step (2), the strong acid has a concentration of 0.1-1 mol/L, for example, 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1 mol/L or the like.

In the embodiment provided by the present disclosure, the strong acid has a concentration of 0.1-1 mol/L. If the strong acid has too high a concentration, the shell layer of the precursor is destroyed. If the strong acid has too low a concentration, the hollow structure inside of the precursor is not completely etched in the later reaction and a complete hollow structure cannot be formed.

In an embodiment, in step (2), the precipitant is at least one selected from sodium carbonate, ammonium carbonate, ammonium bicarbonate or ammonium hydroxide.

In an embodiment, the sodium carbonate has a concentration of 1-2 mol/L, for example, 1.0 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L, 2.0 mol/L or the like.

In an embodiment, the ammonium carbonate has a concentration of 2-6 mol/L, for example, 2.0 mol/L, 2.5 mol/L, 3.0 mol/L, 3.5 mol/L, 4.0 mol/L, 4.5 mol/L, 5.0 mol/L, 5.5 mol/L, 6.0 mol/L or the like.

In an embodiment, the ammonium bicarbonate has a concentration of 1-7 mol/L, for example, 1 mol/L, 2 mol/L, 3 mol/L, 4 mol/L, 5 mol/L, 6 mol/L, 7 mol/L or the like.

In an embodiment, the ammonium hydroxide has a concentration of 0.2-1.5 mol/L, for example, 0.2 mol/L, 0.3 mol/L, 0.4 mol/L, 0.5 mol/L, 0.6 mol/L, 0.7 mol/L, 0.8 mol/L, 0.9 mol/L, 1.0 mol/L, 1.1 mol/L, 1.2 mol/L, 1.3 mol/L, 1.4 mol/L, 1.5 mol/L or the like.

In an embodiment, in step (2), the co-precipitation reaction has a temperature of 30-80 °C, for example, 30 °C, 35 °C, 40 °C, 45 °C, 50 °C, 55 °C, 60 °C, 65 °C, 70 °C, 75 °C, 80 °C or the like; and a time of 0.1-5 h, for example, 0.1 h, 1 h, 1.5 h, 2 h, 2.5 h, 3 h, 3.5 h, 4 h, 4.5 h, 5 h or the like.

In an embodiment, in step (2), the prefabricated particle has a particle size of 0.5-3 µm, for example, 0.5 µm, 1 µm, 1.5 µm, 2 µm, 2.5 µm, 3 µm or the like.

In the embodiment of the present disclosure, the prefabricated particle has a particle size of 0.5-3 µm. If the prefabricated particle has too small a particle size, the precipitate grows too slow in the later reaction and the reaction is prolonged, reducing a range of the hollow structure of the precursor. If the prefabricated particle has too large a particle size, the range of the hollow structure of the precursor prepared later is enlarged and the shell layer of the precursor has a reduced thickness.

In an embodiment, in step (3), a molar ratio of the prefabricated particle, the mixed metal salt and the precipitant is (2-3):(1.01-1.5):(2.02-3.02), for example, 2:1.01:2.02, 2.3:1.1:2.1, 2.5:1.3:2.5, 2.7:1.3:2.7, 3:1.5:3.02 or the like.

In an embodiment, in step (3), the stirring has a rotational speed of 700-1000 rpm, for example, 700 rpm, 750 rpm, 800 rpm, 850 rpm, 900 rpm, 950 rpm, 1000 rpm or the like; a temperature of 50-70 °C, for example, 50 °C, 55 °C, 60 °C, 65 °C, 70 °C or the like; and a time of 5-60 h, for example, 5 h, 10 h, 15 h, 20 h, 25 h, 30 h, 35 h, 40 h, 45 h, 50 h, 55 h, 60 h, 65 h, 70 h or the like. The reacted liquid has a pH of 8-9.5, for example, 8.0, 8.1, 8.2, 8.3, 8.4, 8.5, 8.6, 8.7, 8.8, 8.9, 9.0, 9.1, 9.2, 9.3, 9.4, 9.5 or the like, and the reacted liquid has a solid content of 10-30wt%, for example, 10wt%, 12wt%, 14wt%, 16wt%, 18wt%, 20wt%, 22wt%, 24wt%, 26wt%, 28wt%, 30wt% or the like.

In an embodiment of the present disclosure, the pH is 8-9.5. If the reacted liquid has too high a pH, the precipitate cannot agglomerate into a sphere but forms a loose aggregate of small particles. If the reacted liquid has too low a pH, the precipitate agglomerates seriously, resulting in precursors with different shapes.

In an embodiment, the present disclosure provides a method for preparing a cathode material, comprising:
(a) pre-sintering a precursor material to obtain a pre-sintered material;
(b) mixing the pre-sintered material with a lithium salt for a primary sintering to obtain a primary sintered material; and
(c) crushing the primary sintered material for a secondary sintering to obtain the cathode material,
wherein, in step (a), the precursor material is the binary precursor according to an embodiment or a binary precursor obtained by the method according to an embodiment.

In the method for preparing a cathode material provided by an embodiment of the present disclosure, the preceding carbonate binary precursor with a hollow structure, which has a sphere structure, uniform particle size distribution and excellent electrochemical performance, is pre-sintered followed by the primary sintering and the secondary sintering, wherein the carbonate binary precursor is pre-sintered to decompose, subjected to the primary sintering so as to ensure that the carbonate binary precursor decomposes completely and obtain an oxide, and subjected to the secondary sintering so that lithium ions migrate into the precursor and the cathode material is prepared which has a high specific capacity and excellent cycle performance and electrochemical discharge performance. It is to be noted that the features and advantages described above with respect to the carbonate binary precursor with the hollow structure and the preparation method therefor are also applicable to the method for preparing the cathode material and are not repeated here.

In an embodiment, in step (a), the pre-sintering has a temperature of 400-500 °C, for example, 400 °C, 410 °C, 420 °C, 430 °C, 440 °C, 450 °C, 460 °C, 470 °C, 480 °C, 490 °C, 500 °C or the like; and a time of 2-6 h, for example, 2 h, 2.5 h, 3.0 h, 3.5 h, 4.0 h, 4.5 h, 5.0 h, 5.5 h, 6.0 h or the like.

In an embodiment, in step (b), a molar ratio of the pre-sintered material and the lithium salt is 1:(1.02-1.08), for example, 1:1.02, 1:1.03, 1:1.04, 1:1.05, 1:1.06, 1:1.07, 1:1.08 or the like.

In an embodiment, in step (b), the primary sintering has a temperature of 700-850 °C, a time of 8-20 h, for example, 8 h, 9 h, 10 h, 11 h, 12 h, 13 h, 14 h, 15 h, 16 h, 17 h, 18 h, 19 h, 20 h or the like.

In an embodiment, in step (c), the secondary sintering has a temperature of 580-650 °C, for example, 580 °C, 590 °C, 600 °C, 610 °C, 620 °C, 630 °C, 640 °C, 650 °C or the like; and a time of 8-12 h, for example, 8.0 h, 8.5 h, 9.0 h, 9.5 h, 10.0 h, 10.5 h, 11.0 h, 11.5 h, 12.0 h or the like.

In an embodiment, the present disclosure provides a cathode material, which is prepared by the method according to an embodiment.

The cathode material provided by an embodiment of the present disclosure has a relatively high specific capacity and excellent cycle performance and electrochemical discharge performance.

In an embodiment, the present disclosure provides a lithium battery having the cathode material according to an embodiment.

The lithium battery provided by an embodiment of the present disclosure has a high specific energy and a long cycle life.

In an embodiment, the present disclosure provides a vehicle having the lithium battery according to an embodiment.

The vehicle provided by an embodiment of the present disclosure is loaded with the preceding lithium battery having a high specific energy and a long cycle life and has an excellent endurance ability.

### BRIEF DESCRIPTION OF DRAWINGS

The drawings are used to provide a further understanding of technical solutions of the present disclosure and constitute a part of the specification. The drawings are intended to explain the technical solutions of the present disclosure in conjunction with embodiments of the present application and not to limit the technical solutions of the present disclosure.
FIG. 1 is a flowchart of a method for preparing a carbonate binary precursor with a hollow structure according to an embodiment of the present disclosure.
FIG. 2 is a flowchart of a method for preparing a cathode material according to an embodiment of the present disclosure.
FIG. 3 is a scanning electron microscope image of a carbonate binary precursor with a hollow structure prepared in an example of the present disclosure.
FIG. 4 is a cross-sectional scanning electron microscope image of a carbonate binary precursor with a hollow structure prepared in an example of the present disclosure.

### DETAILED DESCRIPTION

Technical solutions of the present disclosure are further described below through embodiments in conjunction with drawings.

In an embodiment, the present disclosure provides a carbonate binary precursor with a hollow structure, where the precursor has a chemical formula of NiₓMn₍₁₋ₓ₎CO₃, wherein x is 0.55 to 0.92. The carbonate binary precursor with the hollow structure has the advantages of a controllable particle size, uniform particle size distribution, high sphericity, and excellent electrochemical performance and energy density. The carbonate binary precursor with the hollow structure can be stably produced in both an ammonia system and an ammonia-free system. Especially in the ammonia-free system, no ammonia-containing wastewater is produced so that the carbonate binary precursor with the hollow structure is environmentally friendly. At the same time, the carbonate binary precursor with the hollow structure contains no metal cobalt, which not only has a reduced raw material cost, but also causes no environmental pollution compared with an existing ternary nickel-cobalt-manganese precursor. In addition, a cathode material prepared by use of the precursor has a relatively high specific capacity and excellent cycle performance and electrochemical discharge performance. If the content of nickel in the precursor is too high, lithium/nickel mixing in the obtained cathode material is severe, resulting in poor cycle performance of a lithium battery loaded with the cathode material. If the content of nickel in the precursor is too low, the lithium battery with the cathode material prepared using the precursor has a reduced capacity. The preceding precursor has a layer thickness of 2-3 µm. an electrolyte in the lithium battery loaded with the cathode material prepared by the precursor has poor osmosis and lithium ions are transmitted for a longer distance, resulting in poor battery performance. If the thickness of the precursor layer is too low, a shell layer is destroyed during the transmission of lithium ions in the lithium battery loaded with the cathode material prepared by the precursor and the cycle performance of the battery is greatly reduced. The precursor has a particle size of 8-15 µm.

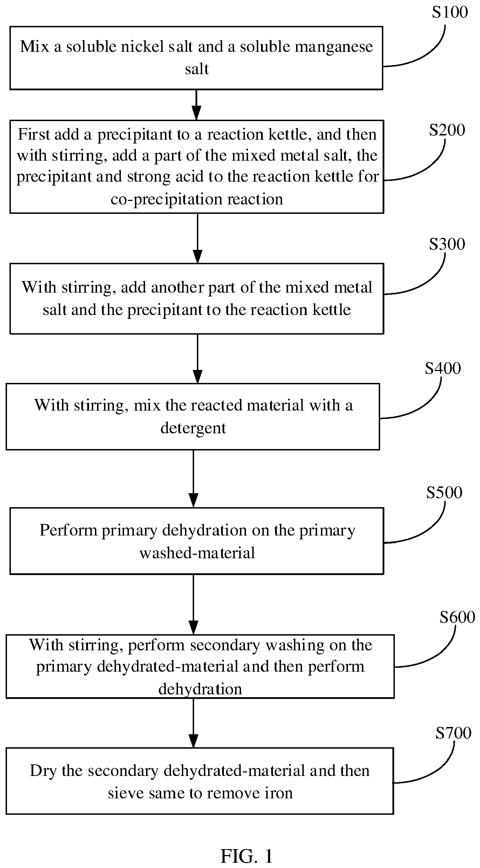

In an embodiment, the present disclosure provides a method for preparing the preceding carbonate binary precursor with the hollow structure. As shown in FIG. 1, the method specifically includes the steps described below.

In S100, a soluble nickel salt and a soluble manganese salt are mixed so that a mixed metal salt is obtained. The soluble nickel salt is at least one selected from nickel chloride and nickel sulfate; and the soluble manganese salt is at least one selected from manganese chloride and manganese sulfate. In the mixed metal salt, the soluble nickel salt and the soluble manganese salt each independently have a concentration of 1-2 mol/L. The soluble nickel salt and the soluble manganese salt are mixed according to a molar ratio (0.55-0.92):(0.08-0.45) of nickel to manganese.

In S200, a precipitant is pre-added to a reaction kettle, and then a part of the mixed metal salt, the precipitant and a strong acid are added to the reaction kettle with stirring for a co-precipitation reaction so that a prefabricated particle is obtained. Based on a 1 L reaction kettle, the precipitant is pre-added in an amount of 2-10 g. The precipitant is at least one selected from sodium carbonate, ammonium carbonate, ammonium bicarbonate or ammonium hydroxide. Sodium carbonate has a concentration of 1-2 mol/L, ammonium carbonate has a concentration of 2-6 mol/L, ammonium bicarbonate has a concentration of 1-7 mol/L, and ammonium hydroxide has a concentration of 0.2-1.5 mol/L. The strong acid is hydrochloric acid, sulfuric acid or nitric acid and has a concentration of 0.1-1 mol/L. The stirring is conducted at a rotational speed of 200-500 rpm. The mixed metal, the precipitant and the strong acid are added to the reaction kettle at a molar ratio of 1:(2.5-5):(0.1-1). The co-precipitation reaction has a temperature of 30-80 °C and a time of 0.1-5 h. The obtained prefabricated particle has a particle size of 0.5-3 µm.

In S300, with stirring, the mixed metal salt and the precipitant are added to the reaction kettle with the prefabricated particle obtained in step S200 so that the mixed metal salt and the precipitant undergo a co-precipitation reaction on a surface of the obtained prefabricated particle. A molar ratio of the prefabricated particle, the mixed metal salt and the precipitant is (2-3):(1.01-1.5):(2.02-3.02). The stirring in this process is controlled to be conducted for 5-60 h at a rotational speed of 700-1000 rpm and a temperature of 50-70 °C. A liquid after the reaction has a pH controlled to be 8-9.5, the co-precipitation reaction is conducted for 10-20 h, and the obtained reacted liquid has a solid content of 10-30wt%, for example, 10wt%, 11wt%, ..., 29wt% and 30wt%. Further, the precipitant and the mixed metal salt are the same as those in step S200.

In S400, a reacted material obtained in step S300 overflows to an aging kettle and is mixed with a detergent with stirring so that a primary washed-material is obtained. The stirring time is 0.1-5 h.

In S500, the primary washed-material obtained in step S400 is subjected to a primary dehydration so that a primary dehydrated-material is obtained. The primary dehydration is carried out by a centrifuge, and a moisture content of the primary dehydrated-material is not higher than 10wt%.

In S600, the primary dehydrated-material is subjected to a secondary washing with pure water and then dehydrated so that a secondary dehydrated-material is obtained. Impurities such as sodium and sulfur in the primary dehydrated-material are removed. The dehydration is carried out by the centrifuge, and a moisture content of the secondary dehydrated-material is not higher than 10wt%.

In S700, the secondary dehydrated-material is dried and sieved for iron removal so that the carbonate binary precursor with the hollow structure is obtained.

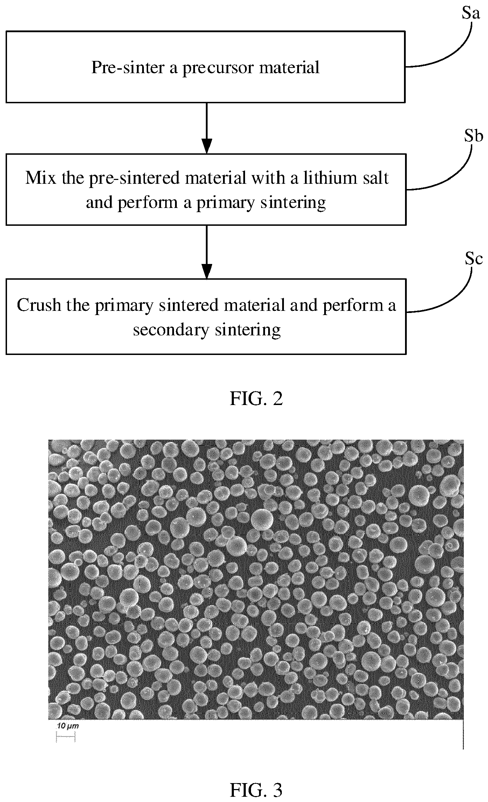

In an embodiment, the present disclosure provides a method for preparing a cathode material. As shown in FIG. 2, the method includes the steps described below.

In Sa, the carbonate binary precursor prepared in the preceding embodiment is pre-sintered for 2-6 h at a temperature of 400-500 °C so that the carbonate precursor with the hollow structure decomposes and an oxide precursor pre-sintered material is obtained.

In Sb, the pre-sintered material obtained in Sa is mixed with a lithium salt and subjected to a primary sintering so that the carbonate precursor decomposes completely and a primary sintered material is obtained. The lithium salt is at least one selected from lithium hydroxide and lithium carbonate. A molar ratio of a precursor material and the lithium salt is 1:(1.02-1.08). The primary sintering has a temperature of 700-850 °C and a time of 8-20 h.

In Sc, the primary sintered material obtained in Sb is crushed and subjected to a secondary sintering so that lithium ions migrate into the precursor and the cathode material is obtained. The secondary sintering has a temperature of 580-650 °C and a time of 8-12 h.

In an embodiment, the present disclosure provides a cathode material, which is prepared by the method provided by the preceding embodiment.

In an embodiment, the present disclosure provides a lithium battery having the cathode material provided by the preceding embodiment.

In an embodiment, the present disclosure provides a vehicle having the lithium battery provided by the preceding embodiment.

### Example 1

A method for preparing a carbonate binary precursor with a hollow structure includes the steps described below.
(1) Nickel sulfate and manganese sulfate were mixed according to a molar ratio 0.88:0.16 of nickel to manganese so that a mixed metal salt was obtained, where both nickel sulfate and manganese sulfate in the mixed metal salt had a concentration of 1 mol/L.
(2) 10 g of a precipitant (the precipitant including sodium carbonate having a concentration of 1.2 mol/L and ammonium hydroxide having a concentration of 0.4 mol/L) was pre-added to a 5 L reaction kettle, and then with stirring (conducted at a rotational speed of 300 rpm), the mixed metal salt, the precipitant and hydrochloric acid (having a concentration of 0.1 mol/L) were simultaneously added to the reaction kettle at a molar ratio of 1:2.5:0.1 for a co-precipitation reaction, wherein the temperature was controlled to be 40 °C and the stirring was conducted for 0.1 h, and a prefabricated particle having a particle size of 1.5-2.5 µm was obtained.
(3) Using the preceding prefabricated particle as a base solution, the mixed metal salt and the precipitant were added to the reaction kettle at a controlled rotational speed of 800-1000 rpm and a controlled temperature of 55 °C. The mixed metal salt and the precipitant were the same as those in step (2). A molar ratio of the prefabricated particle, the mixed metal salt and the precipitant was 2:1.01:2.02. The pH of the system was controlled to be 8.5, the reaction was conducted for 50 h, and the reacted liquid was obtained which had a solid content of 10.5wt%.
(4) The reacted material obtained above was mixed with a sodium hydroxide solution and stirred for 1 h so that a primary washed-material was obtained.
(5) The reacted material obtained above was dehydrated by a centrifuge so that a primary dehydrated-material was obtained, where the moisture content of the primary dehydrated-material was not higher than 10wt%.
(6) The primary dehydrated-material obtained above was washed with pure water and dehydrated so that a secondary dehydrated-material was obtained, where the moisture content of the secondary dehydrated-material was not higher than 10wt%.
(7) The secondary dehydrated-material obtained above was dried and sieved for iron removal so that the carbonate binary precursor with the hollow structure was obtained, which had a particle size of 10 µm and a layer thickness of 5-7 µm. The precursor had a chemical formula of Ni_{0.88}Mn_{0.12}CO₃.

A method for preparing a cathode material includes the steps described below.

In Sa, the carbonate binary precursor with the hollow structure obtained in step (7) was pre-sintered for 4 h at a temperature of 500 °C so that a pre-sintered material was obtained.

In Sb, the pre-sintered material obtained above and lithium hydroxide were mixed at a molar ratio of 1:1.02 and subjected to a primary sintering in an air atmosphere for 18 h at a temperature of 850 °C so that a primary sintered material was obtained.

In Sc, the primary sintered material obtained above was crushed and subjected to a secondary sintering for 12 h at a temperature of 600 °C so that the cathode material was obtained.

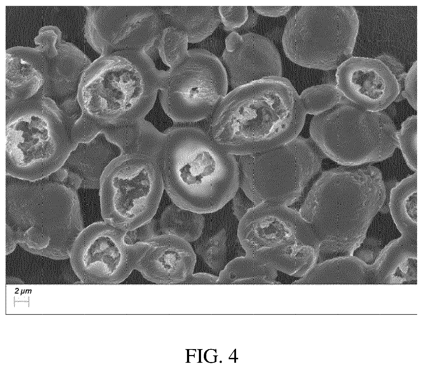

FIG. 3 is a scanning electron microscope image of a carbonate binary precursor with a hollow structure prepared in an example of the present disclosure. As can be seen from FIG. 3, the precursor material prepared by the method has a sphere structure and uniform particle size distribution, and the particle size distribution of the precursor is further found to be uniform under a test by using a laser particle size analyzer. FIG. 4 is a cross-sectional scanning electron microscope image of a carbonate binary precursor with a hollow structure prepared in an example of the present disclosure. As can be seen from FIG. 4, the precursor material prepared by the method has a hollow structure. The detected sodium content of the precursor is less than 300 ppm and the detected sulfur content of the precursor is less than 1000 ppm. Moreover, a button cell was assembled using the obtained cathode material with an ethylene carbonate/dimethyl carbonate (EC/DMC) electrolyte and lithium hexafluorophosphate with a content of 1.0 mol/L, and the electrochemical performance of the button cell was tested It is obtained that the product has a 0.1C capacity of 209-215 mAh/g, an initial efficiency of 92.5% and a capacity retention rate of 98.5% after 50 cycles.

### Example 2

A method for preparing a carbonate binary precursor with a hollow structure includes the steps described below.
(1) Nickel sulfate and manganese sulfate were mixed according to a molar ratio 0.92:0.08 of nickel to manganese so that a mixed metal salt was obtained, where both nickel sulfate and manganese sulfate in the mixed metal salt had a concentration of 1.2 mol/L.
(2) 20 g of a precipitant (the precipitant including sodium carbonate having a concentration of 1.5 mol/L and ammonium carbonate having a concentration of 5 mol/L) was pre-added to a 5 L reaction kettle, and then with stirring (conducted at a rotational speed of 400 rpm), the mixed metal salt, the precipitant and sulfuric acid (having a concentration of 0.3 mol/L) were simultaneously added to the reaction kettle at a molar ratio of 1:3:0.5 for a co-precipitation reaction, wherein the temperature was controlled to be 50 °C and the stirring was conducted for 0.3 h, and a prefabricated particle having a particle size of 2.3-4 µm was obtained.
(3) Using the preceding prefabricated particle as a base solution, the mixed metal salt and the precipitant were added to the reaction kettle at a controlled rotational speed of 800-1000 rpm and a controlled temperature of 60 °C. The mixed metal salt and the precipitant were the same as those in step (2). A molar ratio of the prefabricated particle, the mixed metal salt and the precipitant was 2.2:1.2:2.4. The pH of the system was controlled to be 9 and the reaction was conducted for 30 h, and the reacted liquid was obtained which had a solid content of 20.5wt%.
(4) The reacted material obtained above was mixed with a sodium hydroxide solution and stirred for 1 h so that a primary washed-material was obtained.
(5) The reacted material obtained above was dehydrated by a centrifuge so that a primary dehydrated-material was obtained, where the moisture content of the primary dehydrated-material was not higher than 10wt%.
(6) The primary dehydrated-material obtained above was washed with pure water and dehydrated so that a secondary dehydrated-material was obtained, where the moisture content of the secondary dehydrated-material was not higher than 10wt%.
(7) The secondary dehydrated-material obtained above was dried and sieved for iron removal so that the carbonate binary precursor with the hollow structure was obtained, which had a particle size of 10 µm and a layer thickness of 6.0-7.7 µm. The precursor had a chemical formula of Ni_{0.92}Mn_{0.08}CO₃.

A method for preparing a cathode material includes the steps described below.

In Sa, the carbonate binary precursor with the hollow structure obtained in step (7) was pre-sintered for 4 h at a temperature of 450 °C so that a pre-sintered material was obtained.

In Sb, the pre-sintered material obtained above and lithium hydroxide were mixed at a molar ratio of 1:1.05 and subjected to a primary sintering in an air atmosphere for 20 h at a temperature of 780 °C so that a primary sintered material was obtained.

In Sc, the primary sintered material obtained above after the primary sintering was crushed and subjected to a secondary sintering for 10 h at a temperature of 590 °C so that the cathode material was obtained.

The precursor material prepared in the example of the present disclosure has a sphere structure and uniform particle size distribution, and the particle size distribution of the precursor is further found to be uniform under a test by using a laser particle size analyzer. The detected sodium content of the precursor is less than 300 ppm and the detected sulfur content of the precursor is less than 1000 ppm. Moreover, a button cell was assembled using the obtained cathode material (with an EC/DMC electrolyte and lithium hexafluorophosphate with a content of 1.0 mol/L), and the electrochemical performance of the button cell was tested It is obtained that the product has a 0.1C capacity of 205-210 mAh/g, an initial efficiency of 88.5% and a capacity retention rate of 94.6% after 50 cycles.

### Example 3

A method for preparing a carbonate binary precursor with a hollow structure includes the steps described below.
(1) Nickel chloride and manganese chloride were mixed according to a molar ratio 0.83:0.17 of nickel to manganese so that a mixed metal salt was obtained, where both nickel chloride and manganese chloride in the mixed metal salt had a concentration of 1.5 mol/L.
(2) 30 g of a sodium carbonate solution () having a concentration of 2 mol/L was pre-added to a 5 L reaction kettle, and then with stirring (conducted at a rotational speed of 500 rpm), the mixed metal salt, the sodium carbonate solution and nitric acid (having a concentration of 0.5 mol/L) were simultaneously added to the reaction kettle at a molar ratio of 1:3.5:0.6 for a co-precipitation reaction, wherein the temperature was controlled to be 60 °C and the stirring was conducted for 2 h, and a prefabricated particle having a particle size of 3-5 µm was obtained.
(3) Using the preceding prefabricated particle as a base solution, the mixed metal salt and the sodium carbonate solution were added to the reaction kettle at a controlled rotational speed of 700-1000 rpm and a controlled temperature of 65 °C. A molar ratio of the prefabricated particle, the mixed metal salt and the sodium carbonate solution was 2.5:4.5:3. The pH of the system was controlled to be 9.5 and the reaction was conducted for 55 h, and the reacted liquid was obtained which had a solid content of 15.5wt%.
(4) The reacted material obtained above was mixed with a sodium hydroxide solution and stirred for 1 h so that a primary washed-material was obtained.
(5) The reacted material obtained above was dehydrated by a centrifuge so that a primary dehydrated-material was obtained, where the moisture content of the primary dehydrated-material was not higher than 10wt%.
(6) The primary dehydrated-material obtained above was washed with pure water and dehydrated so that a secondary dehydrated-material was obtained, where the moisture content of the secondary dehydrated-material was not higher than 10wt%.
(7) The secondary dehydrated-material obtained above was dried and sieved for iron removal so that the carbonate binary precursor with the hollow structure was obtained, which had a particle size of 8 µm and a layer thickness of 3-5 µm. The precursor had a chemical formula of Ni_{0.83}Mn_{0.17}CO₃.

A method for preparing a cathode material includes the steps described below.

In Sa, the carbonate binary precursor with the hollow structure obtained in step (7) was pre-sintered for 4 h at a temperature of 400 °C so that a pre-sintered material was obtained.

In Sb, the pre-sintered material obtained above and lithium carbonate were mixed at a molar ratio of 1:1.03 and subjected to a primary sintering in an air atmosphere for 20 h at a temperature of 740 °C so that a primary sintered material was obtained.

In Sc, the primary sintered material obtained above was crushed and subjected to a secondary sintering for 10 h at a temperature of 580 °C so that the cathode material was obtained.

The precursor material prepared in the example of the present disclosure has a sphere structure and uniform particle size distribution, and the particle size distribution of the precursor is further found to be uniform under a test by using a laser particle size analyzer. The detected sodium content of the precursor is less than 300 ppm and the detected sulfur content of the precursor is less than 1000 ppm. Moreover, a button cell was assembled using the obtained cathode material (with an EC/DMC electrolyte and lithium hexafluorophosphate with a content of 1.0 mol/L), and the electrochemical performance of the button cell was tested It is obtained that the product has a 0.1C capacity of 208-213 mAh/g, an initial efficiency of 88.6% and a capacity retention rate of 95.2% after 50 cycles.

### Example 4

A method for preparing a carbonate binary precursor with a hollow structure includes the steps described below.
(1) Nickel chloride and manganese chloride were mixed according to a molar ratio 0.55:0.45 of nickel to manganese so that a mixed metal salt was obtained, where both nickel chloride and manganese chloride in the mixed metal salt had a concentration of 1 mol/L.
(2) 10 g a ammonium carbonate solution having a concentration of 2 mol/L was pre-added to a 5 L reaction kettle, and then with stirring (conducted at a rotational speed of 200 rpm), the mixed metal salt, a sodium carbonate solution and nitric acid (having a concentration of 0.1 mol/L) were simultaneously added to the reaction kettle at a molar ratio of 1:2.5:0.1 for a co-precipitation reaction, wherein the temperature was controlled to be 30 °C and the stirring was conducted for 5 h, and a prefabricated particle having a particle size of 0.5-0.8 µm was obtained.
(3) Using the preceding prefabricated particle as a base solution, the mixed metal salt and the sodium carbonate solution were added to the reaction kettle at a controlled rotational speed of 700-800 rpm and a controlled temperature of 70 °C. A molar ratio of the prefabricated particle, the mixed metal salt and the sodium carbonate solution was 2:1.01:2.02. The pH of the system was controlled to be 8 and the reaction was conducted for 5 h, and the reacted liquid was obtained which had a solid content of 10wt%.
(4) The reacted material obtained above was mixed with a sodium hydroxide solution and stirred for 0.1 h so that a primary washed-material was obtained.
(5) The reacted material obtained above was dehydrated by a centrifuge so that a primary dehydrated-material was obtained, where the moisture content of the primary dehydrated-material was not higher than 10wt%.
(6) The primary dehydrated-material obtained above was washed with pure water and dehydrated so that a secondary dehydrated-material was obtained, where the moisture content of the secondary dehydrated-material was not higher than 10wt%.
(7) The secondary dehydrated-material obtained above was dried and sieved for iron removal so that the carbonate binary precursor with the hollow structure was obtained, which had a particle size of 8 µm and a layer thickness of 2-2.5 µm. The precursor had a chemical formula of Ni_{0.55}Mn_{0.45}CO₃.

A method for preparing a cathode material includes the steps described below.

In Sa, the carbonate binary precursor with the hollow structure obtained in step (7) was pre-sintered for 4 h at a temperature of 400 °C so that a pre-sintered material was obtained.

In Sb, the pre-sintered material obtained above and lithium carbonate were mixed at to a molar ratio of 1:1.03 and subjected to a primary sintering in an air atmosphere for 20 h at a temperature of 740 °C so that a primary sintered-material was obtained.

In Sc, the primary sintered-material obtained above was crushed and subjected to a secondary sintering for 10 h at a temperature of 580 °C so that the cathode material was obtained.

The precursor material prepared in the example of the present disclosure has a sphere structure and uniform particle size distribution, and the particle size distribution of the precursor is further found to be uniform under a test by using a laser particle size analyzer. The detected sodium content of the precursor is less than 300 ppm and the detected sulfur content of the precursor is less than 1000 ppm. Moreover, a button cell was assembled using the obtained cathode material (with an EC/DMC electrolyte and lithium hexafluorophosphate with a content of 1.0 mol/L), and the electrochemical performance of the button cell was tested It is obtained that the product has a 0.1C capacity of 160-165 mAh/g, an initial efficiency of 92% and a capacity retention rate of 98% after 50 cycles.

### Example 5

A method for preparing a carbonate binary precursor with a hollow structure includes the steps described below.
(1) Nickel chloride and manganese chloride were mixed according to a molar ratio 0.92:0.08 of nickel to manganese so that a mixed metal salt was obtained, where both nickel chloride and manganese chloride in the mixed metal salt had a concentration of 2 mol/L.
(2) 50 g of a ammonium bicarbonate solution having a concentration of 7 mol/L was pre-added to a 5 L reaction kettle, and then with stirring (conducted at a rotational speed of 500 rpm), the mixed metal salt, a sodium carbonate solution and sulfuric acid (having a concentration of 1 mol/L) were simultaneously added to the reaction kettle at a molar ratio of 1:5:1 for a co-precipitation reaction, wherein the temperature was controlled to be 80 °C and the stirring was conducted for 0.1 h, and a prefabricated particle having a particle size of 2.5-3 µm was obtained.
(3) Using the preceding prefabricated particle as a base solution, the mixed metal salt and the sodium carbonate solution were added to the reaction kettle at a controlled rotational speed of 900-1000 rpm and a controlled temperature of 50 °C. A molar ratio of the prefabricated particle, the mixed metal salt and the sodium carbonate solution was 3:1.5:3.02. The pH of the system was controlled to be 9.5 and the reaction was conducted for 60 h, and the reacted liquid was obtained which had a solid content of 30wt%.
(4) The reacted material obtained above was mixed with a sodium hydroxide solution and stirred for 1 h so that a primary washed-material was obtained.
(5) The reacted material obtained above was dehydrated by a centrifuge so that a primary dehydrated-material was obtained, where the moisture content of the primary dehydrated-material was not higher than 10wt%.
(6) The primary dehydrated-material obtained above was washed with pure water and dehydrated so that a secondary dehydrated-material was obtained, where the moisture content of the secondary dehydrated-material was not higher than 10wt%.
(7) The secondary dehydrated-material obtained above was dried and sieved for iron removal so that the carbonate binary precursor with the hollow structure was obtained, which had a particle size of 15 µm and a layer thickness of 2.5-3 µm. The precursor had a chemical formula of Ni_{0.92}Mn_{0.08}CO₃.

A method for preparing a cathode material includes the steps described below.

In Sa, the carbonate binary precursor with the hollow structure obtained in step (7) was pre-sintered for 2 h at a temperature of 500 °C so that a pre-sintered material was obtained.

In Sb, the pre-sintered material obtained above and lithium carbonate were mixed at a molar ratio of 1:1.08 and subjected to a primary sintering in an air atmosphere for 8 h at a temperature of 850 °C so that a primary sintered material was obtained.

In Sc, the primary sintered material obtained above was crushed and subjected to a secondary sintering for 8 h at a temperature of 650 °C so that the cathode material was obtained.

The precursor material prepared in the example of the present disclosure has a sphere structure and uniform particle size distribution, and the particle size distribution of the precursor is further found to be uniform under a test by using a laser particle size analyzer. The detected sodium content of the precursor is less than 300 ppm and the detected sulfur content of the precursor is less than 1000 ppm. Moreover, a button cell was assembled using the obtained cathode material (with an EC/DMC electrolyte and lithium hexafluorophosphate with a content of 1.0 mol/L), and the electrochemical performance of the button cell was tested It is obtained that the product has a 0.1C capacity of 210-215 mAh/g, an initial efficiency of 90.6% and a capacity retention rate of 94.2% after 50 cycles.

## Claims

1. A carbonate binary precursor with a hollow structure, wherein the precursor has a chemical formula of NiₓMn₍₁₋ₓ₎CO₃, wherein x is 0.55 to 0.92.

2. The precursor according to claim 1, wherein the precursor has a layer thickness of 2-3 µm.

3. The precursor according to claim 1 or 2, wherein the precursor has a particle size of 8-15 µm.

4. A method for preparing the precursor according to any one of claims 1 to 3, comprising:
(1) mixing a soluble nickel salt and a soluble manganese salt to obtain a mixed metal salt;
(2) pre-adding a precipitant to a reaction kettle, and then adding a part of the mixed metal salt, the precipitant and a strong acid to the reaction kettle with stirring for a co-precipitation reaction to obtain a prefabricated particle;
(3) adding another part of the mixed metal salt and the precipitant to the reaction kettle with stirring so that the mixed metal salt and the precipitant undergo a co-precipitation reaction on a surface of the prefabricated particle so as to obtain a reacted liquid;
(4) mixing the reacted material with a detergent with stirring to obtain a primary washed-material;
(5) performing primary dehydration on the primary washed-material to obtain a primary dehydrated-material;
(6) performing secondary washing on the primary dehydrated-material and then performing dehydration to obtain a secondary dehydrated-material; and
(7) drying the secondary dehydrated-material and then sieving same to remove iron to obtain the carbonate binary precursor with the hollow structure.

5. The method according to claim 4, wherein in step (1), the soluble nickel salt and the soluble manganese salt are mixed according to a molar ratio (0.55-0.92):(0.08-0.45) of nickel to manganese.

6. The method according to claim 4 or 5, wherein in step (1), in the mixed metal salt, the soluble nickel salt and the soluble manganese salt each independently have a concentration of 1-2 mol/L.

7. The method according to any one of claims 4 to 6, wherein in step (1), the soluble nickel salt is at least one selected from nickel chloride and nickel sulfate.

8. The method according to any one of claims 4 to 7, wherein in step (1), the soluble manganese salt is at least one selected from manganese chloride and manganese sulfate.

9. The method according to any one of claims 4 to 8, wherein in step (2), based on a 1 L reaction kettle, the precipitant is pre-added in an amount of 2-10 g.

10. The method according to any one of claims 4 to 9, wherein in step (2), the stirring is conducted at a rotational speed of 200-500 rpm.

11. The method according to any one of claims 4 to 10, wherein in step (2), the mixed metal, the precipitant and the strong acid are added to the reaction kettle at a molar ratio of 1:(2.5-5):(0.1-1).

12. The method according to any one of claims 4 to 11, wherein in step (2), the strong acid is hydrochloric acid, sulfuric acid or nitric acid.

13. The method according to any one of claims 4 to 12, wherein in step (2), the strong acid has a concentration of 0.1-1 mol/L.

14. The method according to any one of claims 4 to 13, wherein in step (2), the precipitant is at least one selected from sodium carbonate, ammonium carbonate, ammonium bicarbonate or ammonium hydroxide.

15. The method according to claim 14, wherein sodium carbonate has a concentration of 1-2 mol/L.

16. The method according to claim 14 or 15, wherein ammonium carbonate has a concentration of 2-6 mol/L.

17. The method according to any one of claims 14 to 16, wherein ammonium bicarbonate has a concentration of 1-7 mol/L.

18. The method according to any one of claims 14 to 17, wherein ammonium hydroxide has a concentration of 0.2-1.5 mol/L.

19. The method according to any one of claims 4 to 18, wherein in step (2), the co-precipitation reaction has a temperature of 30-80 °C, and a time of 0.1-5 h.

20. The method according to any one of claims 4 to 19, wherein in step (2), the prefabricated particle has a particle size of 0.5-3 µm.

21. The method according to any one of claims 4 to 20, wherein in step (3), a molar ratio of the prefabricated particle, the mixed metal salt and the precipitant is (2-3):(1.01-1.5):(2.02-3.02).

22. The method according to any one of claims 4 to 21, wherein in step (3), the stirring has a rotational speed of 700-1000 rpm, a temperature of 50-70 °C, and a time of 5-60 h, and the reacted liquid has a pH of 8-9.5 and a solid content of 10-30wt%.

23. A method for preparing a cathode material, comprising:
(a) pre-sintering a precursor material to obtain a pre-sintered material;
(b) mixing the pre-sintered material with a lithium salt for a primary sintering to obtain a primary sintered material; and
(c) crushing the primary sintered material for a secondary sintering to obtain the cathode material;
wherein in step (a), the precursor material is the binary precursor according to any one of claims 1 to 3 or a binary precursor obtained by the method according to any one of claims 4 to 22.

24. The method according to claim 23, wherein in step (a), the pre-sintering has a temperature of 400-500 °C and a time of 2-6 h.

25. The method according to claim 23 or 24, wherein in step (b), a molar ratio of the pre-sintered material and the lithium salt is 1:(1.02-1.08).

26. The method according to any one of claims 23 to 25, wherein in step (b), the primary sintering has a temperature of 700-850 °C and a time of 8-20 h.

27. The method according to any one of claims 23 to 26, wherein in step (c), the secondary sintering has a temperature of 580-650 °C and a time of 8-12 h.

28. A cathode material, which is prepared by the method according to any one of claims 23 to 27.

29. A lithium battery having the cathode material according to claim 28.

30. A vehicle having the lithium battery according to claim 29.
